# EUROPEAN PATENT APPLICATION

(11) **EP 3 827 929 A1**
(43) Date of publication of application: **02.06.2021**
(21) Application number: 20199812.7
(22) Date of filing: 02.10.2020
(51) Int. Cl.: B25F 5/02

(54) **SWITCH FOR POWER TOOL**

(30) Priority: 26.11.2019 CN 201911173254
(71) Applicant: Techtronic Cordless GP, Anderson, SC 29621 (US)
(72) Inventor: WANG, Zheng Jun, Dongguan City, Guangdong (CN); XIE, You Lian, Dongguan City, Guangdong (CN)
(74) Representative: Grünecker Patent- und Rechtsanwälte PartG mbB

(57) **Abstract**

The invention relates to a handheld power tool (10) including: a body (12); an electric motor (50) mounted in the body (12); a switch (40) mounted in the body (12) and to deliver electric power to the motor (50) when activated; a first actuator (20) mounted in the body (12) and engaged by a user to be moved by the user from a first position to a second position; a second actuator (220) mounted in the body (12) and engaged by the user to be moved by the user from a first position to a second position; and a motion transfer device (30) engageable by both actuators, to actuate the switch when both the actuators are in the second position.

## Description

### Field

This invention relates to a switch for a power tool.

### Background

Safety features of power tools are important to ensure that the users of such power tools are not injured. For example, power tools with sharp cutting blades may have guards on the blades to protect users in the event of an accidental start. Another way to improve the safety of a power tool is to ensure that an accidental start does not occur, or to at least minimise the likelihood of an accidental start.

It is an object of the present invention to improve the safety of power tools.

### Summary of Invention

In an aspect, there is provided a handheld power tool including:
a body;
an electric motor mounted in the body;
a switch mounted in the body and to deliver electric power to the motor when activated;
a first actuator mounted in the body and engaged by a user to be moved by the user from a first position to a second position;
a second actuator mounted in the body and engaged by the user to be moved by the user from a first position to a second position; and
a motion transfer device engageable by both actuators, to actuate the switch when both the actuators are in the second position.

Preferably, when both the first and second actuators are engaged by the user and moved from the first position to the second position, the motion transfer device moves linearly to actuate the switch.

Preferably, when only the first or the second actuator is engaged by the user and moved from the first position to the second position, the motion transfer device moves angularly and does not actuate the switch.

Preferably, the switch is directly or indirectly connected to the electric motor.

Preferably, the motion transfer device includes:
a first contact surface to be contacted by the first actuator when the first actuator is engaged by the user;
a second contact surface to be contacted by the second actuator when the second actuator is engaged by the user; and
a pivot and translation point located between the first and second contact surfaces

Preferably, the motion transfer device is movably coupled to the first and second actuators.

Preferably, the motion transfer device is pivotably attached to only one of the first or second actuators.

Preferably, the motion transfer device is cam-shaped to actuate the switch when both the actuators are in the second position.

Preferably, the first actuator is pivotably mounted in the body, and the second actuator is slidably mounted in the body.

Preferably, the first actuator has a maximum stroke that does not actuate the switch when the first actuator is in the second position.

Preferably, the second actuator has a maximum stroke that does not actuate the switch when the second actuator is in the second position.

### Brief Description of Drawings

Preferred embodiments of the present invention will be described by way of examples only, with reference to the accompanying drawings:
Fig. 1 is a cross sectional view of a handheld power tool according to a first embodiment, in which a motion transfer device is in a first position;
Fig. 2 is an enlarged view of the power tool shown in Fig. 1, specifically showing the motion transfer device and a switch;
Fig. 3 is a cross sectional view of the handheld power tool shown in Fig. 1, when a first actuator is engaged;
Fig. 4 is a cross sectional view of the handheld power tool shown in Fig. 1, when a second actuator is engaged; and
Fig. 5 is a cross sectional view of the handheld power tool shown in Fig. 1, when both the first and second actuators are engaged.
Fig. 6 is a schematic of the switch and motion transfer device according to a second embodiment.
Fig. 7 is a schematic of the switch and motion transfer device according to a third embodiment.
Fig. 8 is a schematic of the switch and motion transfer device according to a fourth embodiment.

### Description of Embodiments

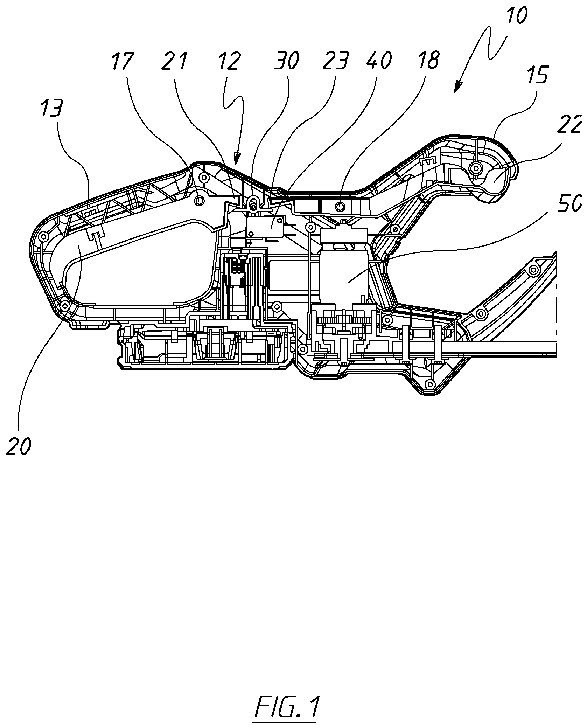

Figs. 1 to 5 show a handheld power tool 10 according to a preferred embodiment. The handheld power tool 10, in the example of Figs. 1 to 5 of a hedge trimmer, has a body 12, a rear handle 13 and a pommel handle 15. The handles 13 and 15 are integrated with the body 12.

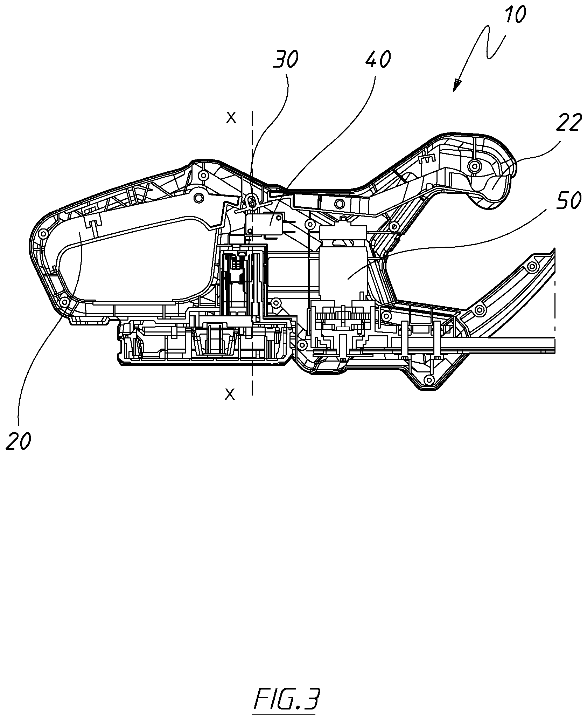

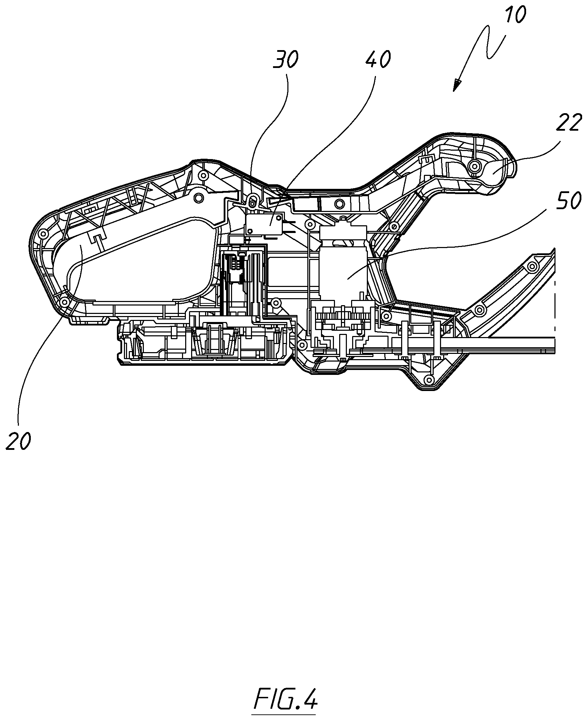

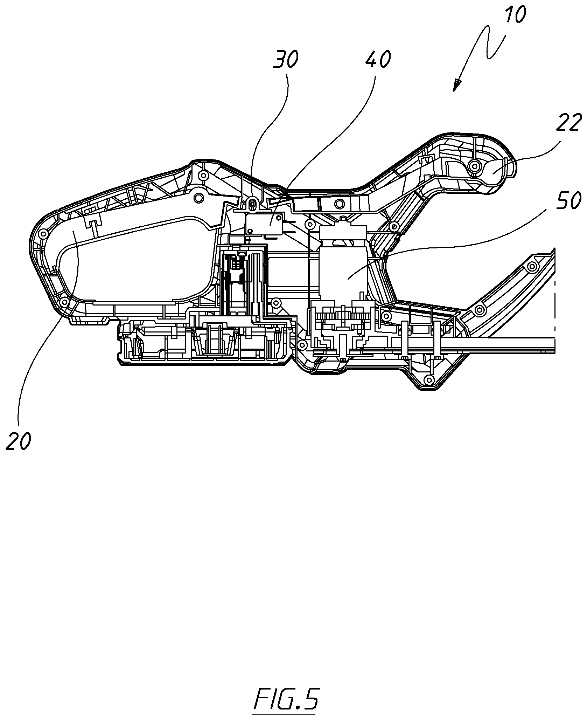

The rear handle 13 has a first actuator 20 mounted in the body 12. The first actuator 20 can pivot about a pin 17. The pommel handle 15 has a second actuator 22, also mounted in the body 12, as shown in Figs. 1 to 5. The second actuator 22 can pivot about a pin 18. Each of the actuators 20 and 22 can be engaged by a user to be moved by the user from a first position to a second position. The first position for actuator 20 and 22 is shown in Fig. 1. The second position for actuator 20 is shown in Figs. 3 and 5. The second position for actuator 22 is shown in Figs. 4 and 5. Each of the actuators 20 and 22 has a portion 21 and 23 respectively. The portions 21 and 23 project from each actuation member 20 and 22. In the example embodiment shown in Figs. 1 to 5, the portions 21 and 23 are narrower than the actuation members 20 and 22. Each portion 21 and 23 has a corresponding contact surface 24 and 25 respectively.

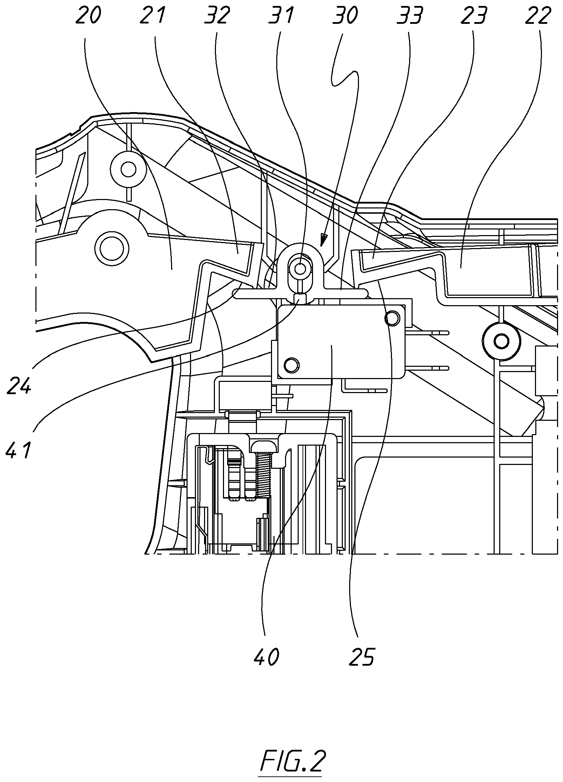

A switch 40 is mounted in the body 12 of the power tool 10 using a fastening means such as a screw or may be secured via pins (not numbered). The switch 40 has a pressable contact 41, as shown in Fig. 2. The switch 40 is directly connected to and can activate an electric motor 50. It is also envisaged that the switch 40 may be indirectly connect to the electric motor 50 by way of a relay (not shown) or the like. The switch 40 is in the form of a mechanical switch and is preferably a push button switch or spring biased switch that can return to a resting or non-activated position once pressure by the user is removed. Other mechanical switches such as a single throw or toggle switch may also be used. The switch 40 is independent of the handles 13 and 15, and is also independent of the actuation members 20 and 22. This means that the switch 40 remains stationary within the body 12 (or relative to the body), and is also stationary relative to the actuators 20 and 22. The actuators 20 and 22 move relative to the body 12 and also move relative to the switch 40.

A motion transfer device 30 is also mounted in the body 12 of the power tool 10 and is used to engage the switch 40. The motion transfer device 30 can pivot or move angularly about pin 31, as shown in Figs. 3 and 4. The motion transfer device 30 can also slide or translate linearly along axis X-X of the pin 31, such that the motion transfer device 30 can move toward and away from the switch 30, as shown in Figs 1, 2 and 5. In the example embodiment, the contact 41 of the single throw or toggle switch 40 pushes the motion transfer device 30 away, when the actuators 20 and 22 are released by the user. The motion transfer device 30 also has contact surfaces 33 and 32, as seen in Fig. 2.

In other arrangements, another mechanism may be used to ensure that both handles 13 and 15 must be engaged to actuate the switch. For example, the shape of the motion transfer device may be triangular, instead of having an oval shape and projecting contact surfaces 32 and 33.

Operation of the arrangement will now be described.

To operate the handheld power tool 10, the user must grip both the rear handle 13 and the pommel handle 15 of the power tool 10. In doing so, the operator is then able to engage both actuators 20 and 22 by squeezing each of the actuators 20 and 22 toward each of the respective handles. The actuators 20 and 22 are both moved from the first position, as shown in Fig. 1 to the second position, as shown in Fig. 5. When the actuators 20 and 22 are engaged by the user, the actuators 20 and 22 move from the first position shown in Fig. 1 to the second position shown in Fig. 5, moving about the pins 17 and 18. Figs. 1 and 5 show that as a result of the first and second actuators 20 and 22 being engaged, the motion transfer device 30 has translated linearly toward the switch 40 and has pressed in on the contact 41. By engaging both actuators 20 and 22, the user creates contact between the portions 21 and 23. In particular, contact is created between the contact surfaces 24 and 25, and the contact surfaces 33 and 32 of the motion transfer device 30, thereby translating the motion transfer device 30 along axis X-X of the pin 31 and toward the switch 40. In turn, the motion transfer device 30 presses the contact 41 of the switch 40, thereby actuating the switch 40 and subsequently the electric motor 50. Thus, Fig. 1 shows the motion transfer device 30 in a non-activated (or first) position and Fig. 5 shows the motion transfer device 30 in an activated (or second) position.

If, however, the user only engages the first actuator 20 as shown in Fig. 3, the first portion 21 will contact the surface 32 of the motion transfer device 30, and the second portion 23 will not contact surface 33 of the motion transfer device 30. In one scenario where only the first actuator 20 is engaged, the motion transfer device 30 moves angularly and does not actuate the switch 40. The motion transfer device 30 tilts or moves angularly around the contact 41 of the switch 40, and the power tool 10 will not operate.

Similarly, if the user only engages the second actuator 22 as shown in Fig. 4, the second portion 22 will contact the surface 33 of the motion transfer device 30, and the first portion 21 will not contact the surface 32 of the motion transfer device 30. In one scenario where only the second actuator 22 is engaged, the motion transfer device 30 moves angularly and does not actuate the switch 40. The motion transfer device 30 tilts or moves angularly around the contact 41 of the switch 40 and the power tool 10 will not operate. In other words, when only the first or the second actuator 20 or 22 is engaged, the motion transfer device 30 moves angularly and does not activate the switch 40 by pushing the contact 41 into the switch 40. The switch 40 is actuated by rotation of the motion transfer device 30 by a certain degree of radian around the pin 31.

As described above, the power tool 10 requires engagement of both actuators 20 and 22 to translate or move the motion transfer device 30 linearly from the first position to the second position to actuate the switch 40. As this requires the user to use both hands, the likelihood of an accidental start of the power tool 10 is reduced.

The actuators 20 and 22 can be moved independently of the switch 40 and are not directly coupled to the switch 40. Motion of the switch 40 within the body 12 is not required to operate the motor 50, meaning that assembly and disassembly of the power tool 10 is simpler, especially if a component requires repair or replacement.

The example of Figs. 1 to 5 shows a preferred implementation. Other implementations can be used. For example, instead of the motion transfer device being T-shaped, the motion transfer device could be of a different shape, such as triangular, and still be translated linearly by the actuators 20 and 22 to their second position.

In another form, the actuators maybe shaped differently. For example, instead of the actuators having portions which step down to be narrower than the remainder of the actuators, the actuators may have a tapered end. This tapered end could then be used to engage the motion transfer device.

In a further alternative form, instead of the actuators coming into physical contact with the motion transfer device, magnets may be used. It is envisaged that the first portion 21 of the first actuator 20 and the contact surface 32 of the motion transfer device 30 have the same polarity magnet attached. Similarly, the second portion 23 of the second actuator 22 and the contact surface 33 of the motion transfer device 30 have the same polarity magnet attached. In this configuration, when the user engages the actuators 20 and 22, the opposing magnetic forces will urge the motion transfer device linearly into engagement with the switch 40, without the actuators 20 and 22 coming into contact with the motion transfer device 30.

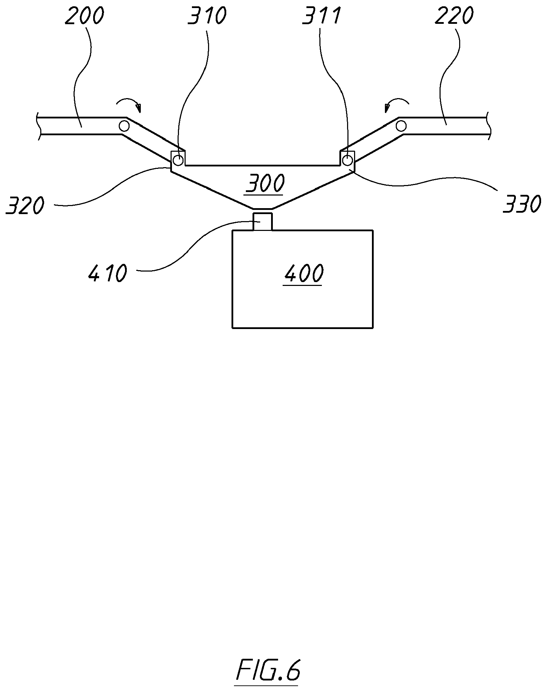

A second embodiment of the switch and motion transfer device is shown in Fig. 6. Switch 400 is mounted in the body 12 of the power tool 10 in the same way as the first embodiment described above. The switch 400 has a contact 410, upon which a motion transfer device 300 rests or sits just above the contact 410. The motion transfer device 300 has a first end 320 and a second end 330. The first end 320 and the second end 330 each have respective pivots 310 and 311, each pivot 310, 311 being movably coupled to a respective first actuator 200 and a second actuator 220. In use, when the first actuator 200 and the second actuator 220 are engaged by a user, the motion transfer device 300 moves and presses the switch contact 410, thereby actuating the switch 400. If only one of the actuators 200, 220 are engaged, then the motion transfer device 300 moves angularly about the switch contact 410 and does not actuate the switch 400. By only engaging one of the actuators 200, 220, the end 320 or 330 movably coupled to the actuator that is not engaged is lifted, whilst the end 320 or 330 that is engaged moves downward. This is achieved because the surface of the motion transfer device 300 that contacts the switch contact 410 is smooth, thereby allowing the motion transfer device 300 to slide over the contact 410.

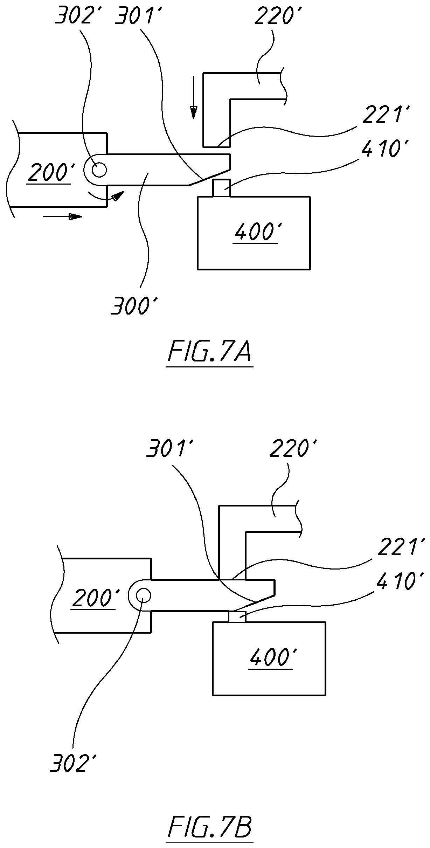

A third embodiment of the switch and motion transfer device is shown in Figs. 7A and 7B. Switch 400' is mounted in the body 12 of the power tool 10 in the same way as the first embodiment described above. The switch 400' has a contact 410', upon which a motion transfer device 300' rests. The motion transfer device 300' has an end 301' which rests on or above the contact 410', as shown in Fig. 7A. The end 301' can be slanted, curved or arc shaped. The motion transfer device 300' has another end 302' which is pivotably attached to actuator 200'. As shown in Figs 7A and 7B, the motion transfer device 300' is pivotably attached to only one actuator, namely actuator 200'. The actuator 200' is restricted to move only in a horizontal direction relative to the switch 400'. When the actuator 200' is engaged by a user, the arc shaped end 301' slides over the contact 410', but cannot not actuate the switch 400' by itself. As is shown in Fig. 7A, motion transfer device 300' lifts up over the contact 410' due to the shape of the end 301'. To actuate the switch 400', actuator 220' must also be engaged by the user. When actuator 220' is engaged, end 221' pushes end 301' into contact 410', thereby actuating the switch 400'. As shown in Fig. 7B, when actuator 200' is engaged, the end 301' of the motion transfer device 300' that pushes the contact 410' is closer to the pivot 302' than when the actuator 200' is not engaged. The actuator 220' is restricted to move only in a vertical direction relative to the switch 400'. And the maximum stroke of the actuator 220' cannot actuate the switch 400'.

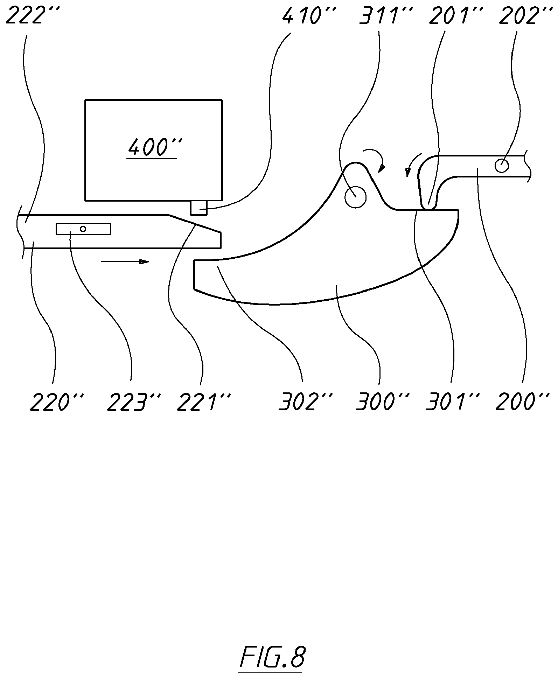

A fourth embodiment of the switch and motion transfer device is shown in Fig. 8. Switch 400" is mounted in the body 12 of the power tool 10 in the same way as the first embodiment described above. A first actuator 200" associated with a handle of the handheld power tool (not shown) has an end 201". The first actuator 200" is mounted in body 12 and pivotable about pin 202". The fourth embodiment also has a motion transfer device 300" mounted in body 12 and is pivotable about pin 311". The motion transfer device has a first end 301" and a second end 302". Also provided is a second actuator 220" slidably mounted in body 12 which has a first end 221" and a second end 222". The second actuator 220" is slidable along track 223". To actuate the switch 400", a user engages the first actuator 200" which pivots about 202", causing end 201" to contact end 301" of the motion transfer device 300". The motion transfer device 300" then pivots about 311", causing the second end 302" to contact end 221" of the second trigger 220". The user must also engage the second actuator 220", by sliding trigger 220" toward the motion transfer device 300". In doing so, end 221" presses against switch contact 410", thereby actuating switch 400". Actuation is achieved because the motion transfer device 300" is cam-shaped. As is evident from Fig. 8, the switch 400" cannot be actuated unless both actuators 200" and 220" are engaged by the user. The maximum stroke of the actuator 220" cannot actuate the switch 400" due to the sloped end 221". Also, the stroke of the actuator 200" is restricted, and the maximum stroke of the actuator 200" cannot actuate the switch 400" by itself.

## Claims

1. A handheld power tool including:
a body;
an electric motor mounted in the body;
a switch mounted in the body and to deliver electric power to the motor when activated;
a first actuator mounted in the body and engaged by a user to be moved by the user from a first position to a second position;
a second actuator mounted in the body and engaged by the user to be moved by the user from a first position to a second position; and
a motion transfer device engageable by both actuators, to actuate the switch when both the actuators are in the second position.

2. The handheld power tool of claim 1, wherein when both the first and second actuators are engaged by the user and moved from the first position to the second position, the motion transfer device moves linearly to actuate the switch.

3. The handheld power tool of claim 2, wherein when only the first or the second actuator is engaged by the user and moved from the first position to the second position, the motion transfer device moves angularly and does not actuate the switch.

4. The handheld power tool of claim 3, wherein the switch is directly or indirectly connected to the electric motor.

5. The handheld power tool of claim 4, wherein the motion transfer device includes:
a first contact surface to be contacted by the first actuator when the first actuator is engaged by the user;
a second contact surface to be contacted by the second actuator when the second actuator is engaged by the user; and
a pivot and translation point located between the first and second contact surfaces.

6. The handheld power tool of claim 4, wherein the motion transfer device is movably coupled to the first and second actuators.

7. The handheld power tool of claim 4, wherein the motion transfer device is pivotably attached to only one of the first or second actuators.

8. The handheld power tool of claim 7, wherein the motion transfer device is cam-shaped to actuate the switch when both the actuators are in the second position.

9. The handheld power tool of claim 4, wherein the first actuator is pivotably mounted in the body, and the second actuator is slidably mounted in the body.

10. The handheld power tool of claim 9, wherein the first actuator has a maximum stroke that does not actuate the switch when the first actuator is in the second position.

11. The handheld power tool of claim 10, wherein the second actuator has a maximum stroke that does not actuate the switch when the second actuator is in the second position.
